(19) **Europäisches Patentamt / European Patent Office / Office européen des brevets**

(11) **EP 3 082 016 A1**

(12) # EUROPEAN PATENT APPLICATION
published in accordance with Art. 153(4) EPC

(43) Date of publication:
**19.10.2016 Bulletin 2016/42**

(21) Application number: **14877149.6**

(22) Date of filing: **31.10.2014**

(51) Int Cl.:
***G06F 3/01*** *(2006.01)*

(86) International application number:
**PCT/CN2014/090058**

(87) International publication number:
**WO 2015/101098 (09.07.2015 Gazette 2015/27)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **31.12.2013 CN 201310750471**

(71) Applicant: **Huawei Technologies Co., Ltd.**
**Longgang District**
**Shenzhen, Guangdong 518129 (CN)**

(72) Inventor: **HUANG, Maosheng**
**Shenzhen**
**Guangdong 518129 (CN)**

(74) Representative: **Thun, Clemens**
**Mitscherlich PartmbB**
**Patent- und Rechtsanwälte**
**Sonnenstraße 33**
**80331 München (DE)**

(54) **WRIST-WORN TERMINAL DEVICE AND DISPLAY CONTROL METHOD THEREOF**

(57) Embodiments of the present invention provide a wrist-worn terminal device and a display control method thereof. The wrist-worn terminal device includes a wrist strap, a display screen, a sensor, and a controller, where the display screen is disposed on a first surface of the terminal device, and when the terminal device is worn around a wrist or a wrist-shaped object by using the wrist strap, the first surface faces outwards from the wrist or the wrist-shaped object; the sensor is configured to detect an included angle between the display screen and a horizontal plane; and the controller is configured to control on and off of the display screen according to the included angle detected by the sensor. According to the embodiments of the present invention, an included angle between a display screen and a horizontal plane is detected, and on and off of the display screen is automatically controlled according to the included angle, so that control of the on and off of the display screen of the wrist-worn terminal device can be easily implemented without requiring collaboration of both hands of a user, thereby facilitating ease of use for the user.

FIG. 7

**Description**

This application claims priority to Chinese Patent Application NO. 201310750471.X, filed with Chinese Patent Office on December 31, 2013 and entitled "WRIST-WORN TERMINAL DEVICE AND DISPLAY CONTROL METHOD THEREOF", which is incorporated herein by reference in its entirety.

**TECHNICAL FIELD**

Embodiments of the present invention relate to the field of electronic devices, and more specifically, to a wrist-worn terminal device and a display control method thereof.

**BACKGROUND**

As a combination of a conventional watch and a conventional mobile phone, a wrist-worn terminal device is becoming a replacement or a companion of the conventional watch and the conventional mobile phone because of a small size, convenience, and various functions of the wrist-worn terminal device. The wrist-worn terminal device has a wrist strap structure that fits the conventional watch and by which the terminal is worn around a wrist. The wrist-worn terminal device also has a processor, a memory, a display, various sensors, a communication module, a battery, and the like, thereby possessing a function of a smart mobile terminal. The wrist-worn terminal device can run an application, serve as a smart personal assistant, and communicate with another mobile phone by using the communication module and a wireless network. Sensors of the wrist-worn smart terminal may include a camera that is configured to acquire a picture, and a gyroscope, a gravity sensor, or the like that is configured to sense a motion status of the terminal.

A disadvantage of the wrist-worn terminal device lies in that, when controlling on and off of a display screen, a user needs both hands to collaborate, with one hand pressing a button or the screen on the terminal worn around the other wrist to activate or cancel displaying, which is inconvenient and results in poor interactive experience.

**SUMMARY**

Embodiments of the present invention provide a wrist-worn terminal device and a display control method thereof, so that control of on and off of a display screen of the wrist-worn terminal device can be easily implemented.

According to a first aspect, a wrist-worn terminal device is provided, including a wrist strap, a display screen, a sensor, and a controller, where the display screen is disposed on a first surface of the terminal device, and when the terminal device is worn around a wrist or a wrist-shaped object by using the wrist strap, the first surface faces outwards from the wrist or the wrist-shaped object; the sensor is configured to detect an included angle between the display screen and a horizontal plane; and the controller is configured to control on and off of the display screen according to the included angle detected by the sensor.

With reference to the first aspect, in an implementation manner of the first aspect, the controller is specifically configured to turn on the display screen when an absolute value of the included angle is less than a first angle threshold.

With reference to the first aspect and the foregoing implementation manner of the first aspect, in another implementation manner of the first aspect, the controller is specifically configured to turn on the display screen when a time span in which an absolute value of the included angle remains less than a first angle threshold is greater than a first time threshold.

With reference to the first aspect and the foregoing implementation manners of the first aspect, in another implementation manner of the first aspect, the first time threshold ranges from 0.3 second to 2 seconds.

With reference to the first aspect and the foregoing implementation manners of the first aspect, in another implementation manner of the first aspect, the first angle threshold ranges from 15 degrees to 30 degrees.

With reference to the first aspect and the foregoing implementation manners of the first aspect, in another implementation manner of the first aspect, the controller is specifically configured to turn off the display screen when the absolute value of the included angle is greater than a second angle threshold.

With reference to the first aspect and the foregoing implementation manners of the first aspect, in another implementation manner of the first aspect, the controller is specifically configured to turn off the display screen when a time span in which the absolute value of the included angle remains greater than a second angle threshold is greater than a second time threshold.

With reference to the first aspect and the foregoing implementation manners of the first aspect, in another implementation manner of the first aspect, the second time threshold ranges from 0.5 second to 5 seconds.

With reference to the first aspect and the foregoing implementation manners of the first aspect, in another implementation manner of the first aspect, the second angle threshold ranges from 45 degrees to 80 degrees.

With reference to the first aspect and the foregoing implementation manners of the first aspect, in another implementation manner of the first aspect, the wrist-worn terminal device further includes an input/output unit, configured to detect interactive input of a user, where the controller is further configured to turn off the display screen when a time span in which the input/output unit detects no interactive input is greater than a third time threshold.

With reference to the first aspect and the foregoing implementation manners of the first aspect, in another implementation manner of the first aspect, the third time threshold ranges from 5 seconds to 60 seconds.

With reference to the first aspect and the foregoing implementation manners of the first aspect, in another implementation manner of the first aspect, the interactive input is touch input, key input, voice command input, or eye movement interactive input.

According to a second aspect, a display control method of a wrist-worn terminal device is provided, including: detecting an included angle between a display screen of the terminal device and a horizontal plane; and controlling on and off of the display screen according to the included angle.

With reference to the second aspect, in an implementation manner of the second aspect, the controlling on and off of the display screen according to the included angle includes: turning on the display screen when an absolute value of the included angle is less than a first angle threshold.

With reference to the second aspect and the foregoing implementation manner of the second aspect, in another implementation manner of the second aspect, the controlling on and off of the display screen according to the included angle includes: turning on the display screen when a time span in which an absolute value of the included angle remains less than a first angle threshold is greater than a first time threshold.

With reference to the second aspect and the foregoing implementation manners of the second aspect, in another implementation manner of the second aspect, the first time threshold ranges from 0.3 second to 2 seconds.

With reference to the second aspect and the foregoing implementation manners of the second aspect, in another implementation manner of the second aspect, the first angle threshold ranges from 15 degrees to 30 degrees.

With reference to the second aspect and the foregoing implementation manners of the second aspect, in another implementation manner of the second aspect, the controlling on and off of the display screen according to the included angle includes: turning off the display screen when the absolute value of the included angle is greater than a second angle threshold.

With reference to the second aspect and the foregoing implementation manners of the second aspect, in another implementation manner of the second aspect, the controlling on and off of the display screen according to the included angle includes: turning off the display screen when a time span in which the absolute value of the included angle remains greater than a second angle threshold is greater than a second time threshold.

With reference to the second aspect and the foregoing implementation manners of the second aspect, in another implementation manner of the second aspect, the second time threshold ranges from 0.5 second to 5 seconds.

With reference to the second aspect and the foregoing implementation manners of the second aspect, in another implementation manner of the second aspect, the second angle threshold ranges from 45 degrees to 80 degrees.

With reference to the second aspect and the foregoing implementation manners of the second aspect, in another implementation manner of the second aspect, after the turning on the display screen, the method further includes: detecting interactive input of a user; and turning off the display screen when a time span in which no interactive input is detected is greater than a third time threshold.

With reference to the second aspect and the foregoing implementation manner of the second aspect, in another implementation manner of the second aspect, the third time threshold ranges from 5 seconds to 60 seconds.

With reference to the second aspect and the foregoing implementation manners of the second aspect, in another implementation manner of the second aspect, the interactive input is touch input, key input, voice command input, or eye movement interactive input.

According to the embodiments of the present invention, an included angle between a display screen and a horizontal plane is detected, and on and off of the display screen is automatically controlled according to the included angle, so that control of on and off of a display screen of a wrist-worn terminal device can be easily implemented without requiring collaboration of both hands of a user, thereby facilitating ease of use for the user.

## BRIEF DESCRIPTION OF DRAWINGS

FIG. 1 is a schematic diagram of a wrist-worn terminal device according to an embodiment of the present invention;
FIG. 2 is a schematic diagram of a coordinate system of a usage state in FIG. 1;
FIG. 3 is a schematic diagram of a wrist-worn terminal device according to an embodiment of the present invention;
FIG. 4 is a schematic diagram of a coordinate system of a usage state in FIG. 3;
FIG. 5 is a schematic diagram of another coordinate system when a display screen of a wrist-worn terminal device faces upwards;

FIG. 6 is a schematic diagram of a horizontal angle of a display screen;

FIG. 7 is a block diagram of a wrist-worn terminal device according to an embodiment of the present invention;

FIG. 8 is a schematic diagram representing a principle by which a gravity sensor measures a horizontal angle of a to-be-measured plane;

FIG. 9 is another schematic diagram representing a principle by which a gravity sensor measures a horizontal angle of a to-be-measured plane;

FIG. 10 is a schematic diagram of layout of a gravity sensor according to an embodiment of the present invention;

FIG. 11 is a schematic diagram of layout of a gravity sensor according to another embodiment of the present invention;

FIG. 12 is a schematic diagram of layout of a gravity sensor according to another embodiment of the present invention;

FIG. 13 is a schematic diagram of layout of a gravity sensor according to another embodiment of the present invention;

FIG. 14 is a flowchart of a display control method of a wrist-worn terminal device according to an embodiment of the present invention;

FIG. 15 is a flowchart of a display control method of a wrist-worn terminal device according to another embodiment of the present invention;

FIG. 16 is a flowchart of a display control method of a wrist-worn terminal device according to another embodiment of the present invention;

FIG. 17 is a flowchart of a display control method of a wrist-worn terminal device according to another embodiment of the present invention;

FIG. 18 is a flowchart of a display control method of a wrist-worn terminal device according to another embodiment of the present invention;

FIG. 19 is a flowchart of a display control method of a wrist-worn terminal device according to another embodiment of the present invention; and

FIG. 20 is a block diagram of an inner system of a wrist-worn terminal device according to another embodiment of the present invention.

## DESCRIPTION OF EMBODIMENTS

The following clearly and completely describes the technical solutions in embodiments of the present invention with reference to the accompanying drawings in the embodiments of the present invention. Apparently, the described embodiments are some but not all of the embodiments of the present invention. All other embodiments obtained by persons of ordinary skill in the art based on the embodiments of the present invention without creative efforts shall fall within the protection scope of the present invention.

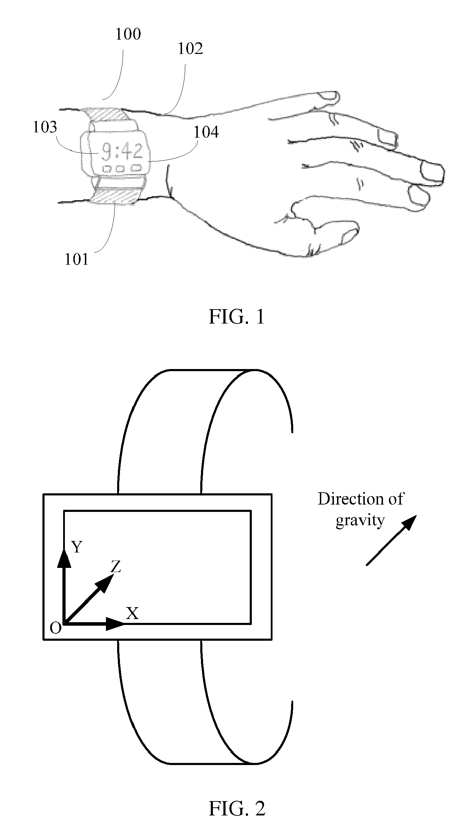

FIG. 1 is a schematic diagram of a wrist-worn terminal device according to an embodiment of the present invention. Specifically, FIG. 1 shows a top view of a terminal device 100 in one usage state.

As shown in FIG. 1, the terminal device 100 includes a wrist strap 101, where the wrist strap 101 is configured to round a wrist or a wrist-shaped object 102 (which is shown as a wrist of a user in FIG. 1) so that the terminal device 100 is worn around the wrist or the wrist-worn object 102. This embodiment of the present invention sets no limitation on a material of the wrist strap 101; for example, the material may be leather, metal, or another material.

A display screen 103 is disposed on a first surface 104 of the terminal device 100, and when the terminal device 100 is worn around the wrist or the wrist-shaped object 102 by using the wrist strap 101, the first surface 104 faces outwards from the wrist or the wrist-shaped object 102. The display screen 103 may be an LED (Light-Emitting Diode, light emitting diode) display, an OLED (Organic Light-Emitting Diode, organic light-emitting diode) display, an LCD (Liquid Crystal Display, liquid crystal display) device, or the like. The display screen 103 may be a touchscreen, and the user can directly perform touch input on the display screen 103. The display screen 103 is configured to display content of a system, and in an example in FIG. 1, the display screen 103 displays current time.

In the usage state in FIG. 1, the user raises the wrist to view the content displayed on the display screen 103. In this case, the display screen 103 is basically parallel to a horizontal plane, that is, an included angle between the display screen and the horizontal plane is in a relatively small range around 0 degrees.

FIG. 2 is a schematic diagram of a coordinate system of the usage state in FIG. 1.

To facilitate elaboration of the embodiment of the present invention without losing generality, as shown in FIG. 2, a coordinate system of the wrist-worn smart terminal may be defined as follows: a lower left corner of the display screen 103 is an origin O, a left-to-right horizontal line starting from the origin O indicates a direction of an X axis, an upward horizontal line starting from the origin O indicates a direction of a Y axis, and an inward line vertical to the screen is a Z axis(the Z axis points inwards).

The horizontal plane is vertical to a line of gravity. In the usage state in FIG. 1, the line of gravity basically extends along a direction of the Z axis. In this embodiment of the present invention, the included angle between the display screen 103 and the horizontal plane may be defined as an included angle between an X-Y plane and the horizontal plane, regardless of whether the display screen 103 is a flat surface or an arc surface.

Certainly, the coordinate system in FIG. 2 is merely exemplary, and persons skilled in the art may use another coordinate system or an equivalent expression manner as required. For example, in mathematics, the included angle between the display screen 103 and the horizontal plane may also be equivalently defined as an included angle between the Z axis and the line of gravity. Such equivalent expression manners all fall into the scope of the embodiment of the present invention.

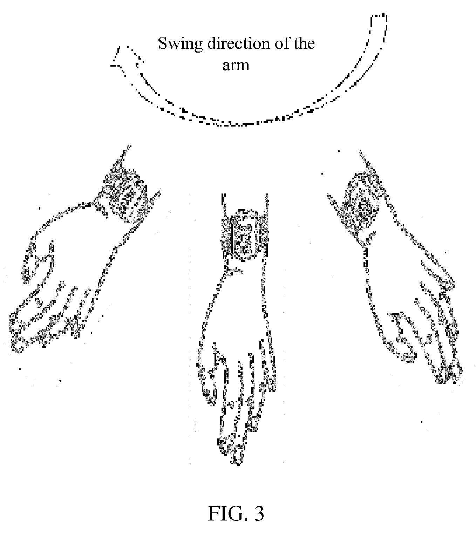

FIG. 3 is a schematic diagram of a wrist-worn terminal device according to an embodiment of the present invention. Specifically, FIG. 3 describes a top view of a terminal device 100 in another usage state.

In the usage state in FIG. 3, a user lowers the arm, for example, swings the arm during walking. In this case, the user generally does not view content displayed on a display screen 103. In this case, the display screen 103 is basically vertical to a horizontal plane, that is, an included angle between the display screen and the horizontal plane is in a relatively small range around 90 degrees.

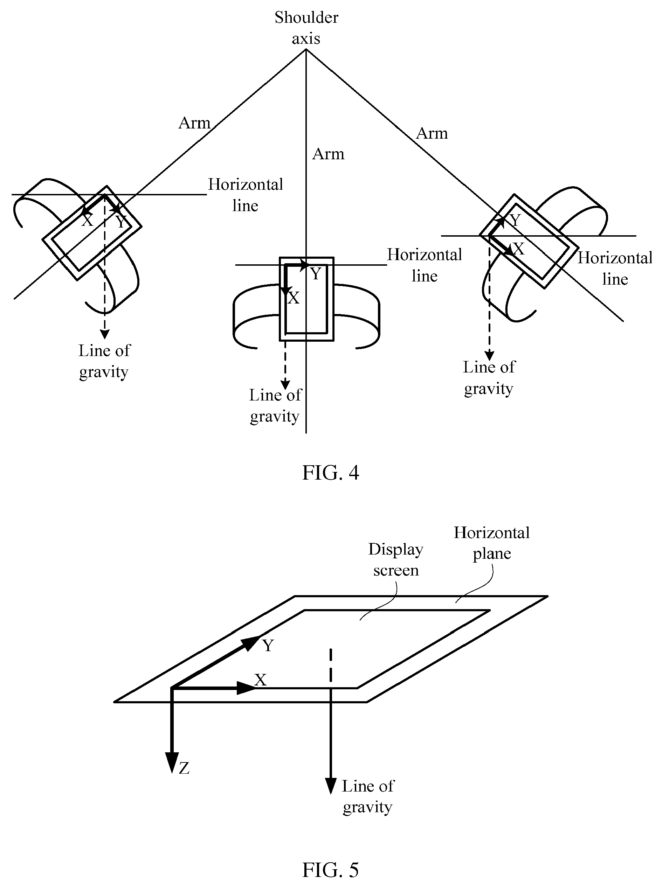

FIG. 4 is a schematic diagram of a coordinate system of the usage state in FIG. 3.

It can be seen that, in the usage state in FIG. 3, a line of gravity is basically in an X-Y plane, or an included angle between an X-Y plane and a line of gravity is relatively small. According to a research and study, when a human being stands or walks normally, an included angle between an arm and a line of gravity is generally less than 45 degrees.

FIG. 5 is a schematic diagram of another coordinate system when a display screen of a wrist-worn terminal device faces upwards. It can be seen from FIG. 5 that, in this case, a line of gravity is parallel to a Z axis of the display screen, an included angle between an X-Y plane of the display screen and the line of gravity is a right angle, and a horizontal angle of the display screen is 0 degrees.

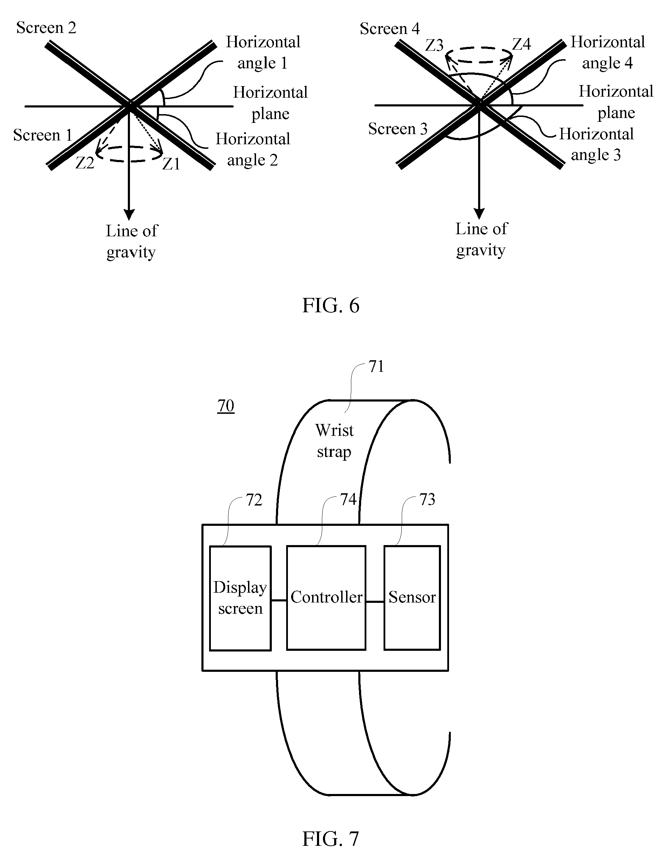

FIG. 6 is a schematic diagram of a horizontal angle of a display screen. In this embodiment of the present invention, an included angle (which may be referred to as the horizontal angle of the display screen) between the display screen and a horizontal plane is prescribed, without losing generality, as follows: an included angle above the horizontal plane is a positive included angle ranging from 0 degrees to 180 degrees; an included angle below the horizontal plane is a negative included angle ranging from 0 degrees to -180 degrees; and the horizontal angle ranges from -180 degrees to 180 degrees. When a Z axis of the screen faces downwards (as shown in a left diagram of FIG. 6), a front surface of the screen faces upwards, and the horizontal angle of the screen ranges from -90 degrees to 90 degrees; when the Z axis of the screen faces upwards (as shown in a right diagram of FIG. 6), the front surface of the screen faces downwards, and the horizontal angle of the screen ranges from 90 degrees to 180 degrees or -90 degrees to -180 degrees. In FIG. 6, a Z1 axis of a screen 1 faces downwards, a front surface of the screen 1 faces upwards, and a horizontal angle ranges from 0 degrees to 90 degrees; a Z2 axis of a screen 2 faces downwards, a front surface of the screen 2 faces upwards, and a horizontal angle ranges from 0 degrees to -90 degrees; a Z3 axis of a screen 3 faces upwards, a front surface of the screen 3 faces downwards, and a horizontal angle ranges from -90 degrees to -180 degrees; and a Z4 axis of a screen 4 faces upwards, a front surface of the screen 4 faces downwards, and a horizontal angle ranges from 90 degrees to 180 degrees. Obviously, in mathematics, an included angle between the Z axis of the screen and a line of gravity equals the horizontal angle of the screen. In the following of this specification, a method in which a horizontal angle of a screen is used as a determining parameter may be equivalently replaced by a method in which an included angle between a Z axis of a screen and a line of gravity is used as a determining parameter, and such an equivalent solution falls into the protection scope of the present invention.

FIG. 7 is a block diagram of a wrist-worn terminal device according to an embodiment of the present invention. The wrist-worn terminal device 70 in FIG. 7 includes a wrist strap 71, a display screen 72, a sensor 73, and a controller 74.

The wrist strap 71, for example, the wrist strap 101 in FIG. 1, is configured to round a wrist or a wrist-shaped object, so that the terminal device 70 is worn around the wrist-shaped object.

The display screen 72, for example, the display screen 103 in FIG. 1, is disposed on a first surface of the terminal device 70, where when the terminal device 70 is worn around the wrist or the wrist-shaped object by using the wrist strap 71, the first surface faces outwards from the wrist or the wrist-shaped object.

The sensor 73 is configured to detect an included angle between the display screen 72 of the terminal device 70 and a horizontal plane.

The controller 74 is configured to control on and off of the display screen 72 according to the included angle detected by the sensor 73.

According to this embodiment of the present invention, an included angle between a display screen and a horizontal plane is detected, and on and off of the display screen is automatically controlled according to the included angle, so that control of on and off of a display screen of a wrist-worn terminal device can be easily implemented without requiring collaboration of both hands of a user, thereby facilitating ease of use for the user.

Optionally, in an embodiment, a gravity sensor may be used to implement the foregoing sensor 73.

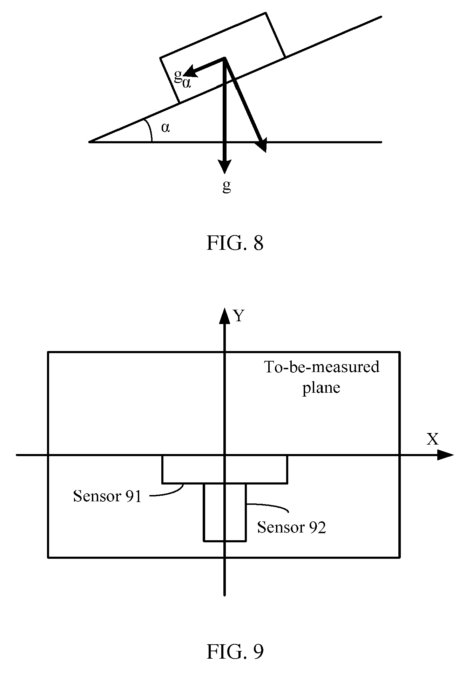

The gravity sensor works according to a principle of a piezoelectric effect. The so-called piezoelectric effect is as follows: "for a heteropolar crystal with no center of symmetry, external force added to the crystal not only deforms the crystal, but also changes a polarization status of the crystal and establishes an electric field inside the crystal, and this phenomenon in which a medium undergoes polarization due to mechanical force is called a direct piezoelectric effect." A mass block and a piezoelectric crystal are integrally disposed inside the gravity sensor, and the crystal is deformed because of a gravitational acceleration of the mass block. Because the deformation generates voltage, provided that a relationship between generated voltage and exerted acceleration is calculated, the acceleration may be converted into voltage and then the voltage is output. The gravity sensor may be configured to measure levelness of a plane. FIG. 8 is a schematic diagram representing a principle by which a gravity sensor measures a horizontal angle of a to-be-measured plane. As shown in FIG. 8, $\alpha$ is an oblique angle of the to-be-measured plane in a direction. The mass block of the gravity sensor deviates due to an effect of a component $g_\alpha$ ($g_\alpha = g\sin\alpha$), in an oblique direction, of a gravitational acceleration $g$; therefore, output voltage of the gravity sensor changes. If an output of the gravity sensor in a horizontal state is Vo, an output when the oblique angle is $\alpha$ is $V_\alpha$, and an output under an effect of an acceleration of 1g (where g is a unit of gravitational acceleration) is V,

$$V_\alpha = V/g \text{ x } \sin\alpha \text{ x } 1g + V_0, \text{ that is, } \alpha = \arcsin[(V_\alpha - V_0)/V].$$

The oblique angle $\alpha$ of the to-be-measured plane in a direction can be obtained through calculation by using the foregoing formula. FIG. 9 is another schematic diagram representing a principle by which a gravity sensor measures a horizontal angle of a to-be-measured plane. If two gravity sensors 91 and 92 are placed on the to-be-measured plane in an orthogonal manner as shown in FIG. 9, an oblique angle $\alpha_X$ of the to-be-measured plane in an X direction and an oblique angle $\alpha_Y$ of the plane in a Y direction are as follows:

$$\alpha_x = \arcsin[(V_X - V_0)/V],$$

$$\alpha_Y = \arcsin[(V_Y - V_0)/V].$$

A horizontal oblique angle and a vertical oblique angle of the to-be-measured plane relative to a horizontal plane may be determined according to the two oblique angles $\alpha_X$ and $\alpha_Y$.

Power consumption of a gravity sensor is much less than that of a display screen. Generally, power consumption of a low-power gravity sensor commonly used in the field is approximately a thousandth of power consumption of a low-power liquid crystal display. As a result, electric power required by a sensor is far less than electric power saved by manually turning off the screen, and therefore, this embodiment of the present invention achieves an excellent electric power saving effect.

A commonly used gravity sensor includes a dual-axis sensor or a tri-axis sensor and can measure gravitational accelerations in two directions. However, this embodiment of the present invention sets no limitation on a type of the sensor 73, provided that the sensor 73 can measure the horizontal angle of the display screen 72.

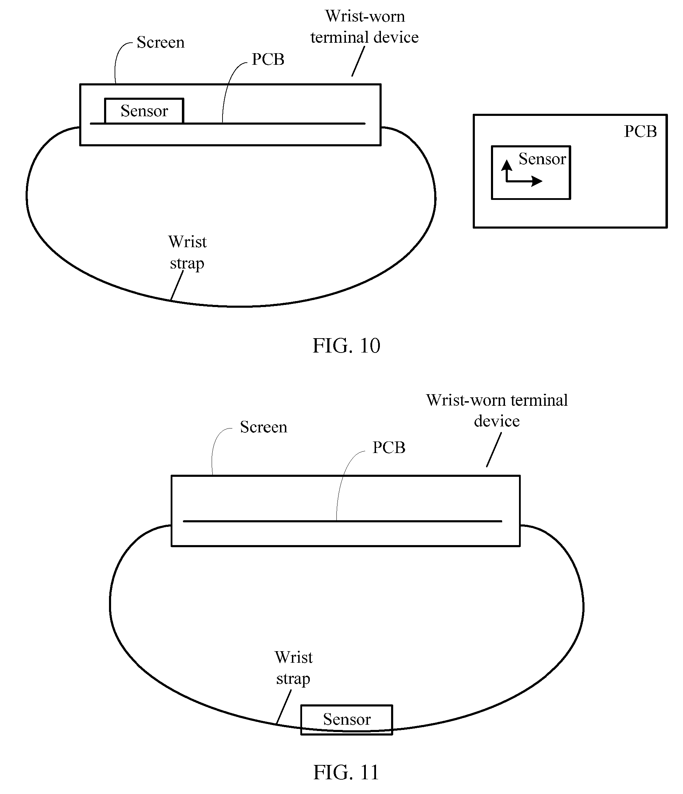

FIG. 10 is a schematic diagram of layout of a gravity sensor according to an embodiment of the present invention. On the left side of FIG. 10 is a side view of an interior of a wrist-worn terminal device, on the right side is a top view of a PCB (Printed Circuit Board, printed circuit board) inside the terminal device, and the gravity sensor may be disposed on the PCB that is parallel to a display screen. The gravity sensor may be a dual-axis sensor or a tri-axis sensor and may measure gravitational accelerations in two directions. A horizontal angle of the display screen may be obtained through measurement according to the methods shown in FIG. 8 and FIG. 9.

FIG. 11 is a schematic diagram of layout of a gravity sensor according to another embodiment of the present invention. FIG. 11 is a side view of an interior of a wrist-worn terminal device. In an example in FIG. 11, the gravity sensor may be disposed on a wrist strap. Specifically, the gravity sensor may be disposed on a location, on the wrist strap, opposite to a display screen, and the gravity sensor is parallel to the display screen. The gravity sensor may be a dual-axis sensor or a tri-axis sensor and may measure gravitational accelerations in two directions. A horizontal angle of the display screen may be obtained through measurement according to the methods shown in FIG. 8 and FIG. 9.

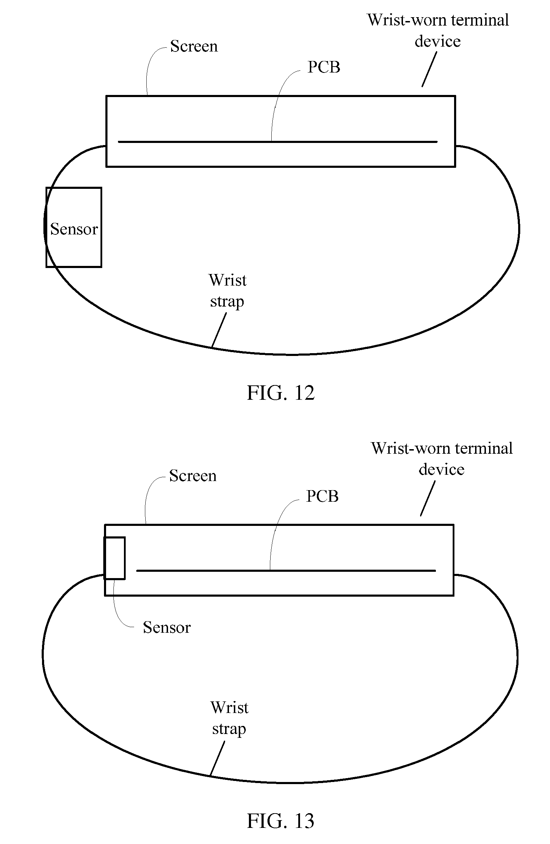

FIG. 12 is a schematic diagram of layout of a gravity sensor according to another embodiment of the present invention. FIG. 12 is a side view of an interior of a wrist-worn terminal device. In an example in FIG. 12, the gravity sensor may be disposed on a wrist strap. Specifically, the gravity sensor may be disposed on a location, on the wrist strap, opposite to the display screen, and the gravity sensor is not parallel to the display screen. However, a fixed angle relationship exists between the gravity sensor and the display screen. The gravity sensor may be a dual-axis sensor or a tri-axis sensor and may measure gravitational accelerations in two directions. According to the methods shown in FIG. 8 and FIG. 9, a horizontal angle of the display screen may be obtained by subtracting a corresponding fixed angle from a horizontal angle measured by the gravity sensor.

FIG. 13 is a schematic diagram of layout of a gravity sensor according to another embodiment of the present invention. FIG. 13 is a side view of an interior of a wrist-worn terminal device. In an example in FIG. 13, the gravity sensor may be disposed inside a wrist-worn terminal device, and the gravity sensor is not parallel to a display screen; however, a fixed angle relationship exists between the gravity sensor and the display screen. The gravity sensor may be a dual-axis sensor or a tri-axis sensor and may measure gravitational accelerations in two directions. According to the methods shown in FIG. 8 and FIG. 9, a horizontal angle of the display screen may be obtained by subtracting a corresponding fixed angle from a horizontal angle measured by the gravity sensor.

Return to FIG. 7. Optionally, in an embodiment, the controller 74 may turn on the display screen 72 when an absolute value of the included angle between the display screen 72 and the horizontal plane is less than a first angle threshold. For example, when the absolute value of the included angle between the display screen 72 and the horizontal plane is less than the first angle threshold, the controller 74 generates a turn-on instruction for turning on the display screen 72, and sends the turn-on instruction to the display screen 72, so that the display screen 72 is automatically turned on.

Optionally, in another embodiment, the controller 74 may turn on the display screen when a time span in which an absolute value of the included angle between the display screen 72 and the horizontal plane remains less than a first angle threshold is greater than a first time threshold. For example, the controller 74 may enable a timer when the sensor 73 obtains, through measurement, that the absolute value of the included angle between the display screen 72 and the horizontal plane is less than the first angle threshold, and reset the timer when the absolute value of the included angle is greater than or equal to the first angle threshold. When a timing value of the timer is greater than the first time threshold, the controller 74 generates a turn-on instruction for turning on the display screen 72, and sends the turn-on instruction to the display screen 72, so that the display screen 72 is automatically turned on.

Optionally, the foregoing first time threshold may range from 0.3 second to 2 seconds, for example, may be 0.5 second or 1 second. In this way, when intending to view the display screen of the wrist-worn terminal device, a user raises the wrist, and within a short period of time, the display screen 72 can be automatically turned on, thereby improving user experience.

Optionally, the foregoing first angle threshold may range from 15 degrees to 30 degrees, for example, may be 20 degrees or 25 degrees. In this way, when the display screen 72 is basically horizontal (that is, a relatively small included angle exists between the display screen 72 and the horizontal plane) after the user raises the wrist, the display screen 72 can be automatically turned on, thereby improving user experience.

Optionally, in another embodiment, the controller 74 may turn off the display screen 72 when the absolute value of the included angle between the display screen 72 and the horizontal plane is greater than a second angle threshold. For example, when the absolute value of the included angle between the display screen 72 and the horizontal plane is greater than the second angle threshold, the controller 74 generates a turn-off instruction for turning off the display screen 72, and sends the turn-off instruction to the display screen 72, so that the display screen 72 is automatically turned off.

Optionally, in another embodiment, the controller 74 may turn off the display screen 72 when a time span in which the absolute value of the included angle between the display screen 72 and the horizontal plane remains greater than a second angle threshold is greater than a second time threshold. For example, the controller 74 may enable a timer when the sensor 73 obtains, through measurement, that the absolute value of the included angle between the display screen 72 and the horizontal plane is greater than the second angle threshold, and reset the timer when the absolute value of the included angle is less than or equal to the second angle threshold. When a timing value of the timer is greater than the second time threshold, the controller 74 generates a turn-off instruction for turning off the display screen 72, and sends the turn-off instruction to the display screen 72, so that the display screen 72 is automatically turned off.

Optionally, the foregoing second time threshold may range from 0.5 second to 5 seconds, for example, may be 1 second, 2 seconds, 3 seconds, or 4 seconds. In this way, when the user does not need to view the display screen 72 and puts down an arm, the display screen 72 can be automatically turned off quickly, thereby saving power.

Optionally, the foregoing second angle threshold may range from 45 degrees to 80 degrees, for example, may be 50 degrees, 60 degrees, or 70 degrees. In this way, when the user puts down an arm or normally swings an arm, the display screen 72 can be automatically turned off, thereby saving power.

Optionally, the wrist-worn terminal device may further include an I/O (Input/Output, input/output) unit, configured to detect interactive input of the user. The controller 74 may turn off the display screen 72 when a time span in which the I/O unit detects no interactive input is greater than a third time threshold. The foregoing interactive input may include touch input, key input, voice command input, and eye movement interactive input. The foregoing third time threshold may range from 5 seconds to 60 seconds. In this way, when the user does not perform an operation on the wrist-worn terminal device for a period of time, the display screen 72 can be automatically turned off, thereby saving power.

In addition, the interactive input may also be used to turn on or turn off the display screen 72. In this case, a priority of the foregoing manners of automatically turning off the display screen is lower than a priority of turning on the display screen by means of interactive input of the user, and in addition, a priority of the foregoing manners of automatically turning on the display screen is also lower than a priority of forcibly turning off the display screen by means of interactive input of the user.

It should be noted that, this embodiment of the present invention sets no limitation on value ranges of the foregoing first angle threshold and second angle threshold. In a case in which both the first angle threshold and the second angle threshold are used, the first angle threshold may be less than the second angle threshold; alternatively, the first angle threshold may equal the second angle threshold.

The following describes a display control method according to an embodiment of the present invention.

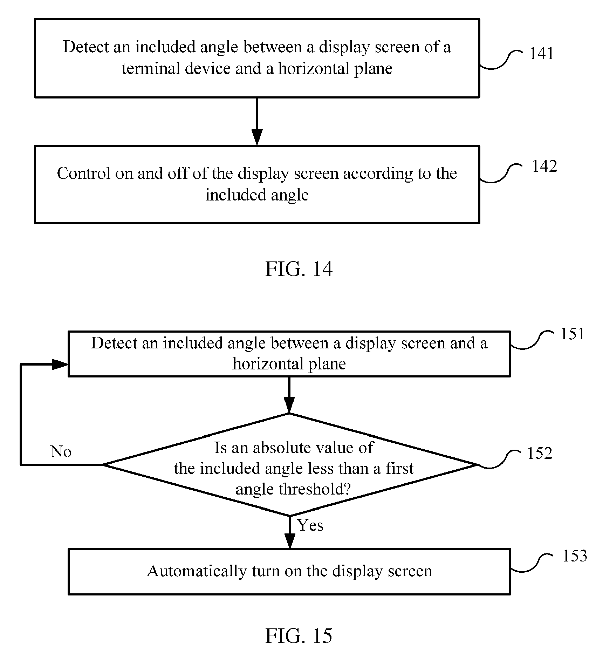

FIG. 14 is a flowchart of a display control method of a wrist-worn terminal device according to an embodiment of the present invention. The display control method in FIG. 14 may be applied to the wrist-worn terminal devices shown in FIG. 1 to FIG. 13.

141. Detect an included angle between a display screen of the terminal device and a horizontal plane.

142. Control on and off of the display screen according to the included angle.

According to this embodiment of the present invention, an included angle between a display screen and a horizontal plane is detected, and on and off of the display screen is automatically controlled according to the included angle, so that control of on and off of a display screen of a wrist-worn terminal device can be easily implemented without requiring collaboration of both hands of a user, thereby facilitating ease of use for the user.

Optionally, in an embodiment, in step 142, the display screen may be turned on when an absolute value of the included angle is less than a first angle threshold.

Optionally, in another embodiment, in step 142, the display screen may be turned on when a time span in which an absolute value of the included angle remains less than a first angle threshold is greater than a first time threshold.

Optionally, in another embodiment, the first time threshold may range from 0.3 second to 2 seconds.

Optionally, in another embodiment, the first angle threshold may range from 15 degrees to 30 degrees.

Optionally, in another embodiment, in step 142, the display screen may be turned off when the absolute value of the included angle is greater than a second angle threshold.

Optionally, in another embodiment, in step 142, the display screen may be turned off when a time span in which the absolute value of the included angle remains greater than a second angle threshold is greater than a second time threshold.

Optionally, in another embodiment, the second time threshold may range from 0.5 second to 5 seconds.

Optionally, in another embodiment, the second angle threshold may range from 45 degrees to 80 degrees.

Optionally, in another embodiment, after the display screen is turned on, interactive input of a user may be detected. The display screen is turned off when a time span in which no interactive input is detected is greater than a third time threshold.

Optionally, in another embodiment, the third time threshold may range from 5 seconds to 60 seconds.

Optionally, in another embodiment, the interactive input may be touch input, key input, voice command input, or eye movement interactive input.

It should be noted that, this embodiment of the present invention sets no limitation on value ranges of the foregoing first angle threshold and second angle threshold. In a case in which both the first angle threshold and the second angle threshold are used, the first angle threshold may be less than the second angle threshold; alternatively, the first angle threshold may equal the second angle threshold.

With reference to specific examples, the following describes, in more details, the method for controlling on and off of the display screen according to this embodiment of the present invention.

FIG. 15 is a flowchart of a display control method of a wrist-worn terminal device according to another embodiment of the present invention. The display control method in FIG. 15 may be applied to the wrist-worn terminal devices shown in FIG. 1 to FIG. 13.

151. Detect an included angle between a display screen and a horizontal plane.

Step 151 may be performed periodically when the display screen is in a turned-off state. Equivalently, as shown in FIG. 6, an included angle between a Z axis of the display screen and a line of gravity may be detected.

152. Determine whether an absolute value of the included angle between the display screen and the horizontal plane is less than a first angle threshold.

Preferably, the first angle threshold ranges from 15 degrees to 30 degrees (for example, 20 degrees). If yes, execute step 153; if no, return to step 151.

153. Automatically turn on the display screen.

In this way, when a user needs to view the display screen and raises a wrist, the display screen becomes basically horizontal, and the display screen may be turned on.

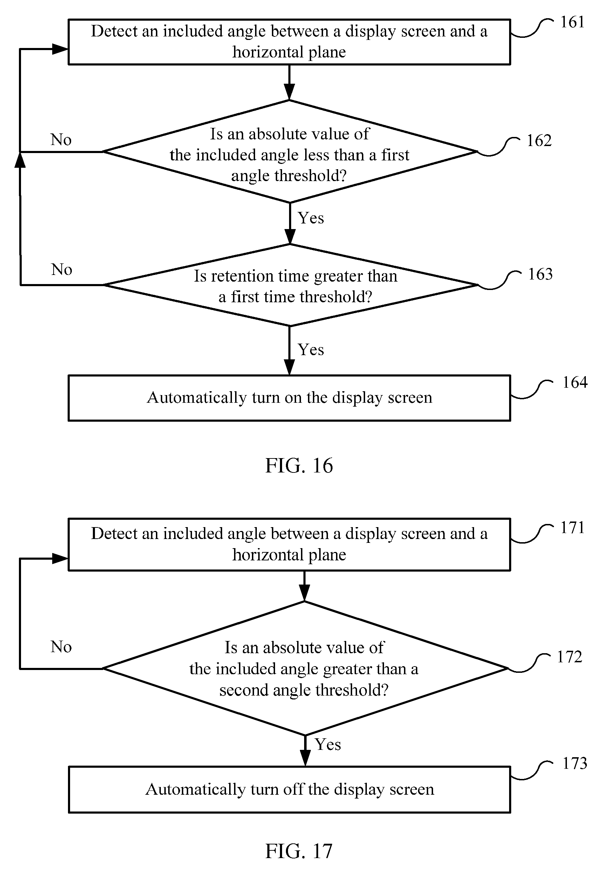

FIG. 16 is a flowchart of a display control method of a wrist-worn terminal device according to another embodiment of the present invention. The display control method in FIG. 16 may be applied to the wrist-worn terminal devices shown in FIG. 1 to FIG. 13.

161. Detect an included angle between a display screen and a horizontal plane.

Step 161 may be performed periodically when the display screen is in a turned-off state. Equivalently, as shown in FIG. 6, an included angle between a Z axis of the display screen and a line of gravity may be detected.

162. Determine whether an absolute value of the included angle between the display screen and the horizontal plane is less than a first angle threshold. In this case, preferably, the first angle threshold ranges from 15 degrees to 30 degrees, for example, may be 20 degrees.

If yes, go to step 163; if no, return to step 161.

163. Determine whether retention time is greater than a first time threshold. Preferably, the first time threshold ranges from 0.3 second to 2 seconds, for example, may be 0.5 second.

If yes, go to step 164; if no, return to step 161.

164. Automatically turn on the display screen.

In this way, when the display screen in a turned-off state enters a basically horizontal state for a short period of time, the display screen may be turned on. In this way, some unstable states can be avoided, so that on and off of the display screen is controlled more accurately.

FIG. 17 is a flowchart of a display control method of a wrist-worn terminal device according to another embodiment of the present invention. The display control method in FIG. 17 may be applied to the wrist-worn terminal devices shown in FIG. 1 to FIG. 13.

171. Detect an included angle between a display screen and a horizontal plane.

Step 171 may be performed periodically when the display screen is in a turned-on state. Equivalently, as shown in FIG. 6, an included angle between a Z axis of the display screen and a line of gravity may be detected.

172. Determine whether an absolute value of the included angle between the display screen and the horizontal plane is greater than a second angle threshold. In this case, preferably, the second angle threshold ranges from 45 degrees to 80 degrees, for example, may be 50 degrees.

If yes, go to step 173; if no, return to step 171.

173. Automatically turn off the display screen.

In this way, when a user does not need to view the display screen and puts down an arm or the user normally swings an arm, the display screen may be turned off.

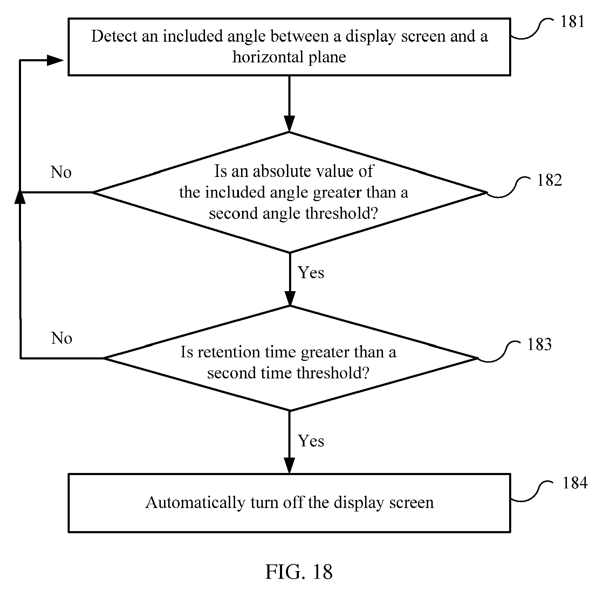

FIG. 18 is a flowchart of a display control method of a wrist-worn terminal device according to another embodiment of the present invention. The display control method in FIG. 18 may be applied to the wrist-worn terminal devices shown in FIG. 1 to FIG. 13.

181. Detect an included angle between a display screen and a horizontal plane.

Step 181 may be performed periodically when the display screen is in a turned-on state. Equivalently, as shown in FIG. 6, an included angle between a Z axis of the display screen and a line of gravity may be detected.

182. Determine whether an absolute value of the included angle between the display screen and the horizontal plane is greater than a second angle threshold. In this case, preferably, the second angle threshold ranges from 45 degrees to 80 degrees, for example, may be 50 degrees.

If yes, go to step 183; if no, return to step 181.

183. Determine whether retention time is greater than a second time threshold, where preferably, the second time threshold ranges from 0.5 second to 5 seconds, for example, may be 1 second.

If yes, go to step 184; if no, return to step 181.

184. Automatically turn off the display screen.

In this way, when a user does not need to view the display screen and puts down an arm or the user normally swings an arm for a short period of time, the display screen may be turned off.

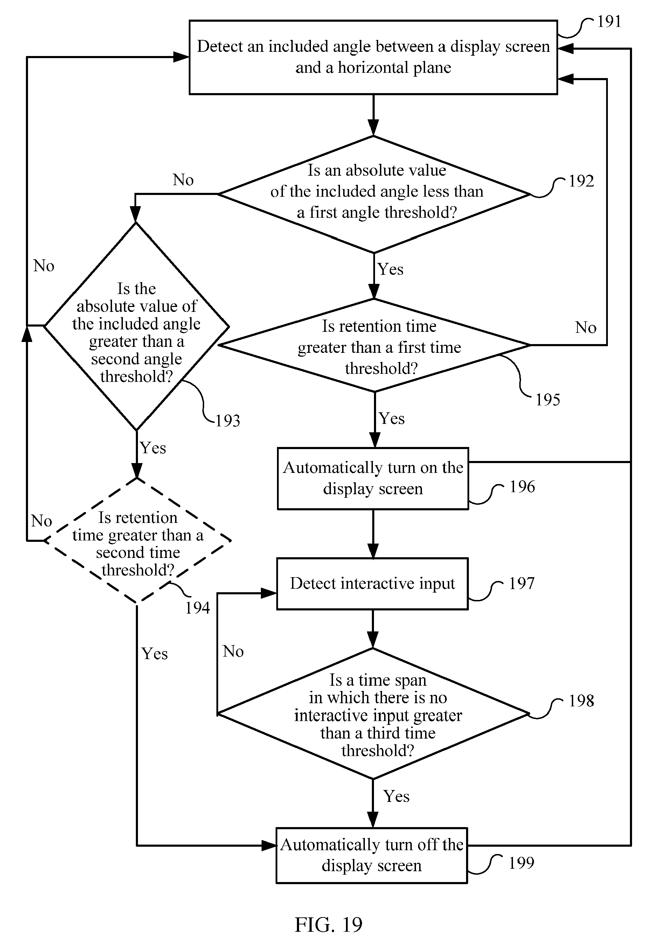

FIG. 19 is a flowchart of a display control method of a wrist-worn terminal device according to another embodiment of the present invention. The display control method in FIG. 19 may be applied to the wrist-worn terminal devices shown in FIG. 1 to FIG. 13.

191. Detect an included angle between a display screen and a horizontal plane.

The detection may be performed by using a sensor, for example, a gravity sensor.

192. Determine whether an absolute value of the included angle between the display screen and the horizontal plane is less than a first angle threshold. In this case, preferably, the first angle threshold ranges from 15 degrees to 30 degrees, for example, may be 20 degrees.

If yes, go to step 195; if no, go to step 193.

193. Determine whether the absolute value of the included angle between the display screen and the horizontal plane is greater than a second angle threshold. Preferably, the second angle threshold ranges from 45 degrees to 80 degrees, for example, may be 60 degrees.

If yes, go to step 194 or 199; if no, return to step 191.

194. Determine whether retention time is greater than a second time threshold. This step is an optional step. Preferably, the second time threshold ranges from 0.5 second to 5 seconds, for example, may be 1 second.

If yes, go to step 199; if no, return to step 191.

195. Determine whether retention time is greater than a first time threshold. Preferably, the first time threshold ranges from 0.3 second to 2 seconds, for example, may be 0.5 second.

If yes, go to step 196; if no, return to step 191.

196. Automatically turn on the display screen.

Then, the procedure may proceed to step 191 and step 197.

197. Detect interactive input of a user.

For example, an I/O unit of the terminal device detects the interactive input. The interactive input may include but is not limited to touchscreen input, key input, voice command input, and eye movement interactive input.

198. Determine whether a time span in which no interactive input is detected is greater than a third time threshold. Preferably, the third time threshold ranges from 5 seconds to 60 seconds, for example, may be 15 seconds.

If yes, go to step 199; if no, return to step 197.

199. Automatically turn off the display screen.

Then, the procedure may return to step 191.

In this way, the display screen can be automatically turned on and turned off.

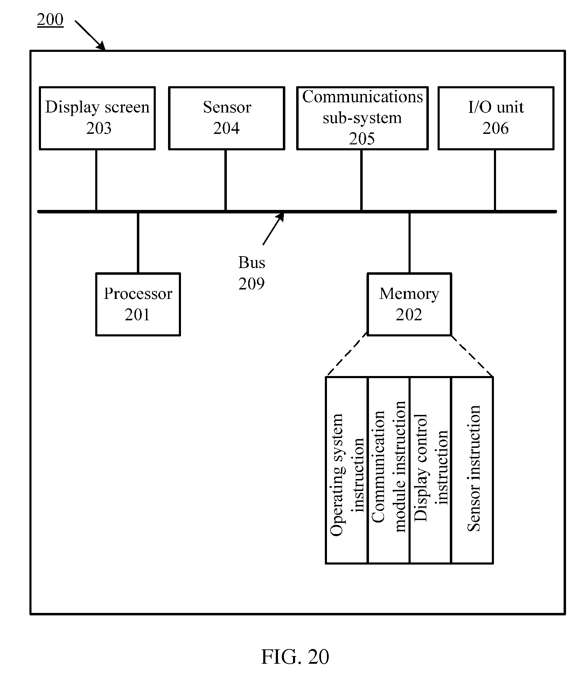

FIG. 20 is a block diagram of an inner system of a wrist-worn terminal device according to another embodiment of the present invention. The wrist-worn terminal device 200 in FIG. 20 may include one or more hardware or software components such as a processor 201, a memory 202, a display screen 203, a sensor 204 (for example, a gravity sensor), a communications sub-system 205, and an I/O unit 206. Components of the wrist-worn terminal device 200 in FIG. 20 are connected to each other by using a bus 209.

The display screen 203 may be an LED display, an OLED display, or an LCD device, and is configured to display content to a user. The sensor 204 is configured to sense and measure a horizontal angle of the display screen 203. The communications sub-system 205 provides outward communication functions such as Wi-Fi (Wireless Fidelity) communication and cellular radio communication. The I/O unit 206 is configured to provide input and output such as key input, touchscreen input, microphone voice input, and loudspeaker output.

The processor 201 may execute various system instructions that are stored in the memory 202, such as an operating system instruction, a communication module instruction, a display control instruction, and a sensor instruction, so as to implement the foregoing control methods of the embodiments of the present invention. To avoid repetition, details are not described again.

For example, the sensor 204 detects an included angle between the display screen 203 of the terminal device 200 and a horizontal plane. The processor 201 controls on and off of the display screen 203 according to the included angle detected by the sensor 204.

According to this embodiment of the present invention, an included angle between a display screen and a horizontal plane is detected, and on and off of the display screen is automatically controlled according to the included angle, so that control of on and off of a display screen of a wrist-worn terminal device can be easily implemented without requiring collaboration of both hands of a user, thereby facilitating ease of use for the user.

Optionally, in an embodiment, the processor 201 may turn on the display screen 203 when an absolute value of the included angle between the display screen 203 and the horizontal plane is less than a first angle threshold.

Optionally, in another embodiment, the processor 201 may turn on the display screen when a time span in which an absolute value of the included angle between the display screen 203 and the horizontal plane remains less than a first angle threshold is greater than a first time threshold. In this case, the terminal device 200 may include a timer, configured to measure the time span in which the absolute value of the included angle between the display screen 203 and the horizontal plane remains less than the first angle threshold.

Optionally, the foregoing first time threshold may range from 0.3 second to 2 seconds, for example, may be 0.5 second or 1 second. In this way, when intending to view the display screen 203 of the wrist-worn terminal device, a user raises the wrist, and within a short period of time, the display screen 203 can be automatically turned on, thereby improving user experience.

Optionally, the foregoing first angle threshold may range from 15 degrees to 30 degrees, for example, may be 20 degrees or 25 degrees. In this way, when the display screen 203 is basically horizontal (that is, a relatively small included angle exists between the display screen 203 and the horizontal plane) after the user raises the wrist, the display screen 203 can be automatically turned on, thereby improving user experience.

Optionally, in another embodiment, the processor 201 may turn off the display screen 203 when the absolute value of the included angle between the display screen 203 and the horizontal plane is greater than a second angle threshold.

Optionally, in another embodiment, the processor 201 may turn off the display screen 203 when a time span in which the absolute value of the included angle between the display screen 203 and the horizontal plane remains greater than a second angle threshold is greater than a second time threshold. In this case, the terminal device 200 may include a timer, configured to measure the time span in which the absolute value of the included angle between the display screen 203 and the horizontal plane remains greater than the second angle threshold.

Optionally, the foregoing second time threshold may range from 0.5 second to 5 seconds, for example, may be 1 second, 2 seconds, 3 seconds, or 4 seconds. In this way, when the user does not need to view the display screen 203 and puts down an arm, the display screen 203 can be automatically turned off quickly, thereby saving power.

Optionally, the foregoing second angle threshold may range from 45 degrees to 80 degrees, for example, may be 50 degrees, 60 degrees, or 70 degrees. In this way, when the user puts down an arm or normally swings an arm, the display screen 203 can be automatically turned off, thereby saving power.

Optionally, the processor 201 may turn off the display screen 203 when a time span in which the I/O unit 206 detects no interactive input is greater than a third time threshold. The foregoing interactive input may include touch input, key input, voice command input, and eye movement interactive input. The foregoing third time threshold may range from 5 seconds to 60 seconds. In this case, the terminal device 200 may include a timer, configured to measure the time span in which no interactive input is detected. In this way, when the user does not perform an operation on the wrist-worn terminal device for a period of time, the display screen 203 can be automatically turned off, thereby saving power.

In addition, the interactive input of the I/O unit 206 may also be used to turn on or turn off the display screen 203. In this case, a priority of the foregoing manners of automatically turning off the display screen is lower than a priority of turning on the display screen by means of interactive input of the user, and in addition, a priority of the foregoing manners of automatically turning on the display screen is also lower than a priority of forcibly turning off the display screen by means of interactive input of the user.

It should be noted that, this embodiment of the present invention sets no limitation on value ranges of the foregoing first angle threshold and second angle threshold. In a case in which both the first angle threshold and the second angle threshold are used, the first angle threshold may be less than the second angle threshold; alternatively, the first angle threshold may equal the second angle threshold.

Persons of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. Persons skilled in the art may use different methods to implement the described functions for each particular application, but it should not be considered that the implementation goes beyond the scope of the present invention.

It may be clearly understood by persons skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit.

The foregoing descriptions are merely specific implementation manners of the present invention, but are not intended to limit the protection scope of the present invention. Any variation or replacement readily figured out by persons skilled in the art within the technical scope disclosed in the present invention shall fall within the protection scope of the present invention. Therefore, the protection scope of the present invention shall be subject to the protection scope of the claims.

**Claims**

**1.** A wrist-worn terminal device, comprising a wrist strap, a display screen, a sensor, and a controller, wherein
the display screen is disposed on a first surface of the terminal device, wherein when the terminal device is worn around a wrist or a wrist-shaped object by using the wrist strap, the first surface faces outwards from the wrist or the wrist-shaped object;
the sensor is configured to detect an included angle between the display screen and a horizontal plane; and

the controller is configured to control on and off of the display screen according to the included angle detected by the sensor.

2. The terminal device according to claim 1, wherein the controller is specifically configured to turn on the display screen when an absolute value of the included angle is less than a first angle threshold.

3. The terminal device according to claim 1, wherein the controller is specifically configured to turn on the display screen when a time span in which an absolute value of the included angle remains less than a first angle threshold is greater than a first time threshold.

4. The terminal device according to claim 3, wherein the first time threshold ranges from 0.3 second to 2 seconds.

5. The terminal device according to any one of claims 2 to 4, wherein the first angle threshold ranges from 15 degrees to 30 degrees.

6. The terminal device according to claim 1, 2, or 3, wherein the controller is specifically configured to turn off the display screen when the absolute value of the included angle is greater than a second angle threshold.

7. The terminal device according to claim 1, 2, or 3, wherein the controller is specifically configured to turn off the display screen when a time span in which the absolute value of the included angle remains greater than a second angle threshold is greater than a second time threshold.

8. The terminal device according to claim 7, wherein the second time threshold ranges from 0.5 second to 5 seconds.

9. The method according to any one of claims 6 to 8, wherein the second angle threshold ranges from 45 degrees to 80 degrees.

10. The terminal device according to any one of claims 2 to 5, further comprising an input/output unit, configured to detect interactive input of a user, wherein
the controller is further configured to turn off the display screen when a time span in which the input/output unit detects no interactive input is greater than a third time threshold.

11. The terminal device according to claim 10, wherein the third time threshold ranges from 5 seconds to 60 seconds.

12. The terminal device according to claim 10 or 11, wherein the interactive input is touch input, key input, voice command input, or eye movement interactive input.

13. A display control method of a wrist-worn terminal device, comprising:

    detecting an included angle between a display screen of the terminal device and a horizontal plane; and
    controlling on and off of the display screen according to the included angle.

14. The method according to claim 13, wherein the controlling on and off of the display screen according to the included angle comprises:

    turning on the display screen when an absolute value of the included angle is less than a first angle threshold.

15. The method according to claim 13, wherein the controlling on and off of the display screen according to the included angle comprises:

    turning on the display screen when a time span in which an absolute value of the included angle remains less than a first angle threshold is greater than a first time threshold.

16. The method according to claim 15, wherein the first time threshold ranges from 0.3 second to 2 seconds.

17. The method according to any one of claims 14 to 16, wherein the first angle threshold ranges from 15 degrees to 30 degrees.

18. The method according to any one of claims 13 to 15, wherein the controlling on and off of the display screen according to the included angle comprises:

turning off the display screen when the absolute value of the included angle is greater than a second angle threshold.

19. The method according to any one of claims 13 to 15, wherein the controlling on and off of the display screen according to the included angle comprises:

turning off the display screen when a time span in which the absolute value of the included angle remains greater than a second angle threshold is greater than a second time threshold.

20. The method according to claim 19, wherein the second time threshold ranges from 0.5 second to 5 seconds.

21. The method according to any one of claims 18 to 20, wherein the second angle threshold ranges from 45 degrees to 80 degrees.

22. The method according to any one of claims 14 to 17, wherein after the turning on the display screen, the method further comprises:

detecting interactive input of a user; and
turning off the display screen when a time span in which no interactive input is detected is greater than a third time threshold.

23. The method according to claim 22, wherein the third time threshold ranges from 5 seconds to 60 seconds.

24. The method according to claim 22 or 23, wherein the interactive input is touch input, key input, voice command input, or eye movement interactive input.

100    102

103    104

101

FIG. 1

Y

Z

X

O

Direction of
gravity

FIG. 2

Swing direction of the arm

FIG. 3

FIG. 4

FIG. 5

Screen 2

Screen 1

Horizontal angle 1

Horizontal plane

Horizontal angle 2

Z2  Z1

Line of gravity

Screen 4

Z3  Z4

Screen 3

Horizontal angle 4

Horizontal plane

Horizontal angle 3

Line of gravity

FIG. 6

70

71

Wrist strap

72

74

73

Display screen — Controller — Sensor

FIG. 7

FIG. 8

FIG. 9

Screen

PCB

Wrist-worn
terminal device

Sensor

PCB

Sensor

Wrist
strap

FIG. 10

Screen

PCB

Wrist-worn terminal
device

Wrist
strap

Sensor

FIG. 11

Wrist-worn terminal
device

Screen

PCB

Sensor

Wrist
strap

FIG. 12

Wrist-worn terminal
device

Screen

PCB

Sensor

Wrist
strap

FIG. 13

Detect an included angle between a display screen of a
terminal device and a horizontal plane

~ 141

Control on and off of the display screen according to the
included angle

~ 142

FIG. 14

Detect an included angle between a display screen and a
horizontal plane

~ 151

No Is an absolute value of
the included angle less than a first
angle threshold?

~ 152

Yes

Automatically turn on the display screen

~ 153

FIG. 15

Detect an included angle between a display screen and a horizontal plane — 161

Is an absolute value of the included angle less than a first angle threshold? — 162

No

Yes

Is retention time greater than a first time threshold? — 163

No

Yes

Automatically turn on the display screen — 164

FIG. 16

Detect an included angle between a display screen and a horizontal plane — 171

Is an absolute value of the included angle greater than a second angle threshold? — 172

No

Yes

Automatically turn off the display screen — 173

FIG. 17

Detect an included angle between a display screen and a horizontal plane ⌇ 181

No ⟵ Is an absolute value of the included angle greater than a second angle threshold? ⌇ 182

Yes

No ⟵ Is retention time greater than a second time threshold? ⌇ 183

Yes

Automatically turn off the display screen ⌇ 184

FIG. 18

Detect an included angle between a display screen and a horizontal plane — 191

Is an absolute value of the included angle less than a first angle threshold? — 192

No

Is the absolute value of the included angle greater than a second angle threshold? — 193

Yes

Is retention time greater than a first time threshold? — 195

No

Yes

Automatically turn on the display screen — 196

Is retention time greater than a second time threshold? — 194

No

Yes

Detect interactive input — 197

No

Is a time span in which there is no interactive input greater than a third time threshold? — 198

Yes

Automatically turn off the display screen — 199

FIG. 19

200

| Display screen 203 | Sensor 204 | Communications sub-system 205 | I/O unit 206 |

Bus 209

| Processor 201 | | Memory 202 |

Operating system instruction | Communication module instruction | Display control instruction | Sensor instruction

FIG. 20

**EP 3 082 016 A1**

| INTERNATIONAL SEARCH REPORT | International application No. |
|---|---|
| | PCT/CN2014/090058 |

**A. CLASSIFICATION OF SUBJECT MATTER**

G06F 3/01 (2006.01) i

According to International Patent Classification (IPC) or to both national classification and IPC

**B. FIELDS SEARCHED**

Minimum documentation searched (classification system followed by classification symbols)

G06F 3/-

Documentation searched other than minimum documentation to the extent that such documents are included in the fields searched

Electronic data base consulted during the international search (name of data base and, where practicable, search terms used)

CNPAT CNKI WPI EPODOC: wrist, watch, display, screen, activate, start, close, horizontal, inclination

**C. DOCUMENTS CONSIDERED TO BE RELEVANT**

| Category* | Citation of document, with indication, where appropriate, of the relevant passages | Relevant to claim No. |
|---|---|---|
| X | CN 103472913 A, (SHENYANG DONGRUAN XIKANG MEDICAL SYSTEM) 25 December 2013 (25.12.2013) , claims 1, 5-7, 11, 12, description, paragraphs [0112]-[0120], [0168]-[0169], and [0177]-[0186] | 1-24 |
| A | CN 102799783 A, (NANJING JIENUOHAN SOFTWARE TECHNOLOGY CO., LTD.) 28 November 2012 (28.11.2012) , the whole document | 1-24 |
| PX | CN 103713740 A, (HUAWEI TECHNOLOGIES CO., LTD.) 09 April 2014 (09.04.2014) , claims 1-24 | 1-24 |

☐ Further documents are listed in the continuation of Box C.    ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&"document member of the same patent family |

| Date of the actual completion of the international search | Date of mailing of the international search report |
|---|---|
| 24 January 2015 | 10 February 2015 |

| Name and mailing address of the ISA State Intellectual Property Office of the P. R. China No. 6, Xitucheng Road, Jimenqiao Haidian District, Beijing 100088, China Facsimile No. (86-10) 62019451 | Authorized officer WU, Min Telephone No. (86-10) 62411697 |
|---|---|

Form PCT/ISA/210 (second sheet) (July 2009)

**INTERNATIONAL SEARCH REPORT**
Information on patent family members

International application No.

PCT/CN2014/090058

| Patent Documents referred in the Report | Publication Date | Patent Family | Publication Date |
|---|---|---|---|
| CN 103472913 A | 25 December 2013 | None | |
| CN 102799783 A | 28 November 012 | None | |
| CN 103713740 A | 09 April 2014 | None | |

Form PCT/ISA /210 (patent family annex) (July 2009)

**EP 3 082 016 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201310750471X